# EUROPÄISCHE PATENTANMELDUNG

(11) **EP 2 708 863 A2**
(43) Veröffentlichungstag der Anmeldung: **19.03.2014**
(21) Anmeldenummer: 13004318.5
(22) Anmeldetag: 03.09.2013
(51) Int. Cl.: G01K 13/02, G01F 1/68, G01K 17/06

(54) **Wärmesensor**

(30) Priorität: 18.09.2012 DE 102012018383
(71) Anmelder: Sensus Spectrum LLC, Raleigh, NC 27615 (US)
(72) Erfinder: Chu, Anh-Tuan, 67071 Ludwigshafen (DE); Schäfer, Burghard, 67112 Mutterstadt (DE); Keller, Volker, 67346 Speyer (DE)
(74) Vertreter: Patentanwälte Dr. Keller, Schwertfeger

(57) **Zusammenfassung**

Die vorliegende Erfindung betrifft einen Wärmesensor umfassend eine Messvorrichtung (20) mit einem Heizelement (24; 124) und einem Messelement (26; 126; 226), wobei das Heizelement (24; 124; 226) und das Messelement (26; 126; 226) thermisch miteinander gekoppelt sind, und ein Gehäuse (12), das den Wärmesensor aufnimmt, wobei das Heizelement (24; 124; 226) und das Messelement (26; 126; 226) auf einem Halbleiterchip (22; 122; 222) monolithisch integriert sind und das Gehäuse (12) eine nach außen weisende Aussparung (18) oder eine Öffnung aufweist, in der der Halbleiterchip (22; 122; 222) aufgenommen ist.

## Beschreibung

Die vorliegende Erfindung betrifft einen Wärmesensor und ein Verfahren zur Messung der Temperatur und/oder des Durchflusses des Fluids mit einem solchen Wärmesensor.

Wärmesensoren können beispielsweise in Wärmezählern eingesetzt werden. Ein Wärmezähler ist ein Messgerät zur Ermittlung der Wärmeenergie, welche Verbrauchern über einen Heizkreislauf zugeführt oder Wärmetauschern über einen Heizkreislauf entnommen wird. Der Wärmezähler ermittelt die Wärmeenergie aus dem Volumenstrom des zirkulierenden Mediums und dessen Temperaturdifferenz zwischen Vor- und Rücklauf.

Üblicherweise werden hierfür ein Durchflussmesser, ein Temperaturfühler im Vorlauf und ein Temperaturfühler im Rücklauf eingesetzt. Die Verwendung von drei verschiedenen Messmitteln ist aufwändig und erfordert drei verschiedene Messstellen innerhalb eines Kreislaufs.

Aus der WO 01/14839 A1 ist ein thermischer Durchflussmesser bekannt, der neben dem Durchfluss auch die Temperatur im Vor- oder Rücklauf bestimmen kann. Der Durchflussmesser umfasst ein Sensorelement, das als PTC-Widerstand mit einem Widerstand von 100 bis 1000 Ohm ausgebildet ist. Das Sensorelement ist im Inneren eines Gehäuses angeordnet und steht über das Gehäuse in thermischer Wirkverbindung mit dem vorbeiströmenden Fluid. Die thermische Wirkverbindung lässt sich durch Wahl eines geeigneten Materials für das Gehäuse sowie gegebenenfalls eines Füllmaterials innerhalb des Gehäuses erreichen.

Die Herstellung von solchen Sensorelementen mit einem PTC-Widerstand, die zur Temperaturmessung bei Wärmezählern eingesetzt werden, ist vergleichsweise aufwendig, da für jedes einzelne Sensorelement die Temperaturkennlinie des Widerstandes R(T) = R₀(1+αΔT + βΔT²), wobei R₀ der Basiswiderstand bei einer vorgegebene Temperatur (in der Regel Raumtemperatur) und α und β Temperaturkoeffizienten erster bzw. zweiter Ordnung sind, durch eine hochgenaue Messung in Temperaturmessbädern ermittelt werden muss. Danach erfolgt bezogen auf die ermittelte Temperaturkennlinie eine Selektion oder auch Paarung der Sensorelemente in verschiedene Messgruppen.

Bei dem bekannten thermischen Durchflussmesser ist darüber hinaus die Wärmeankopplung an das vorbeiströmende Fluid vergleichsweise schlecht. Die Ansprechzeit eines Sensorelements mit einem PTC Widerstand liegt in einem Bereich von einigen Sekunden. Da bei thermischen Durchflussmessern sehr geringe Temperaturunterschiede möglichst schnell erfasst werden müssen, ist die Messgenauigkeit bei dem bekannten thermischen Durchflussmesser vergleichsweise gering.

Es ist Aufgabe der vorliegenden Erfindung, einen Wärmesensor bereitzustellen, mit dem es möglich ist, sowohl den Durchfluss eines Fluids als auch die Temperatur eines Fluids zu messen, welcher kostengünstig herzustellen ist und über eine hohe Messgenauigkeit verfügt.

Erfindungsgemäß wird die Aufgabe gelöst durch einen Wärmesensor umfassend eine Messvorrichtung mit einem Heizelement und einem Messelement, wobei das Heizelement und das Messelement thermisch miteinander gekoppelt sind, und ein Gehäuse, das die Messeinheit aufnimmt, wobei das Heizelement und das Messelement auf einem Halbleiterchip monolithisch integriert sind und wobei das Gehäuse eine nach außen weisende Aussparung oder eine Öffnung aufweist, in der der Halbleiterchip aufgenommen ist.

Auf diese Weise stehen das Heizelement und das Messelement in unmittelbarer thermischer Wirkverbindung mit dem Fluid, so dass zwischen dem Fluid und dem Wärmesensor bzw. dem Messelement eine unmittelbare Wärmeankopplung besteht, was zu Messungen mit einer sehr hohen Genauigkeit führt.

Die Verwendung eines Halbleiterchips vereinfacht darüber hinaus die Prüfung und Kalibrierung des Wärmesensors, da Halbleiterchips bekanntermaßen auf Wafern in großer Stückzahl hergestellt werden. Die Qualität der einzelnen Halbleiterchips ist auf einem Wafer vergleichsweise homogen, so dass nur stichpunktartige Messungen eines Halbleiterchips zur Ermittlung der Temperaturkennlinie des Widerstands R(T) = R₀ (1+αΔT+βΔT²) notwendig sind. Da die Halbleiterchips eine hohe Homogenität und damit geringe Streuungen der Parameter der Temperaturkennlinie der einzelnen Halbleiterchips untereinander aufweisen, ist darüber hinaus die Kalibrierung des Wärmesensors vergleichsweise einfach.

Bei einer bevorzugten Ausführungsform sind das Heizelement und das Messelement mit geringem Abstand, insbesondere im Bereich von etwa 10 bis 30 µm, voneinander angeordnet, Der Chip kann hierbei sehr klein ausgebildet werden. Darüber hinaus ist eine sehr gute thermische Kopplung zwischen Heizelement und Messelement gegeben, ohne eine elektrische Kopplung zu erhalten.

Bei einer alternativen Ausführungsform sind das Messelement und das Heizelement als ein Element ausgebildet. Beispielsweise sind bei dieser Ausführungsform das Messelement und das Heizelement in einem einzigen Widerstandsbauteil realisiert und das eine Widerstandsbauteil erfüllt sowohl die Funktion des Heizens als auch die Funktion des Messens. Diese Ausführungsform stellt eine sehr kostengünstige Weiterbildung des erfindungsgemäßen Wärmesensors dar.

Die Temperaturkennlinie des Widerstands des Messelements und/oder des Heizelements sind gemäß einer bevorzugten Ausführungsform mittels geeigneter Dotierung des Halbleitermaterials einstellbar.

Um die benötigte Energiemenge zur Messung der Strömungsgeschwindigkeit möglichst gering zu halten, ist es bevorzugt, dass das Heizelement als temperaturabhängiger niederohmiger Widerstand ausgebildet ist.

Weiterhin ist es für ein präzises Messergebnis vorteilhaft, dass das Messelement ein temperaturabhängiger hochohmiger Widerstand ist. Weist das Messelement einen Basiswiderstandswert größer als 10 000 Ohm auf, lässt sich eine besonders gute Messauflösung erzielen, wobei hier unter Basiswiderstandswert der Widerstandswert verstanden wird, den das Messelement bei Raumtemperatur aufweist.

Es ist bevorzugt, dass das Heizelement mit gepulstem Strom beaufschlagt wird. Dies ermöglicht einen besonders stromsparenden Betrieb, z.B. für den Einsatz von Batterien.

Eine besonders niedrige Wärmekapazität und damit ein besonders präzises Messergebnis wird dadurch erhalten, dass bei einer bevorzugten Ausführungsform das Messelement und/oder das Heizelement jeweils als freiliegende Leiterbahn auf dem Halbleiterchip ausgebildet sind/ist.

Zur Vermeidung von unerwünschten Störströmen ist es von Vorteil, dass das Gehäuse einen Chipaufnahmebereich aufweist, der aus einem elektrisch isolierenden Material besteht, wobei die Aussparung oder Öffnung, in der der Halbleiterchip aufgenommen ist, in dem Chipaufnahmebereich ausgebildet ist. Als elektrisch isolierendes Material eignet sich beispielsweise Glas oder Keramik.

Gemäß einer bevorzugten Weiterbildung ist das Gehäuse als Hülse mit einer Stirnfläche und einer Mantelfläche ausgebildet, wobei die Stirnfläche der Hülse den Chipaufnahmebereich bildet und die Mantelfläche der Hülse aus einem Metall, Kunststoff oder Keramik besteht.

Gegenstand der vorliegenden Erfindung sind weiterhin Verfahren zur Messung der Temperatur eines Fluids mit einem erfindungsgemäßen Wärmesensor.

Bei einem ersten Verfahren befindet sich das Heizelement in einem unbeheizten Zustand während die Temperatur des Messelements erfasst wird.

Bei zwei weiteren Verfahren kann zusätzlich oder alternativ das Heizelement mit einem gepulsten Strom beaufschlagt werden, wobei das Messelement vom Heizelement erwärmt wird. Die Temperatur des Messelements wird erfasst, um aus der ermittelten Temperatur den Durchfluss des Fluids zu bestimmen.

Bevorzugte Ausführungsformen der Erfindung werden anhand der beigefügten Zeichnungen näher erläutert, in denen zeigen:
- Fig. 1: einen Wärmesensor,
- Fig. 2: eine erste Ausführungsform eines Halbleiterchips,
- Fig. 3: eine zweite Ausführungsform eines Halbleiterchips,
- Fig. 4: eine dritte Ausführungsform eines Halbleiterchips.

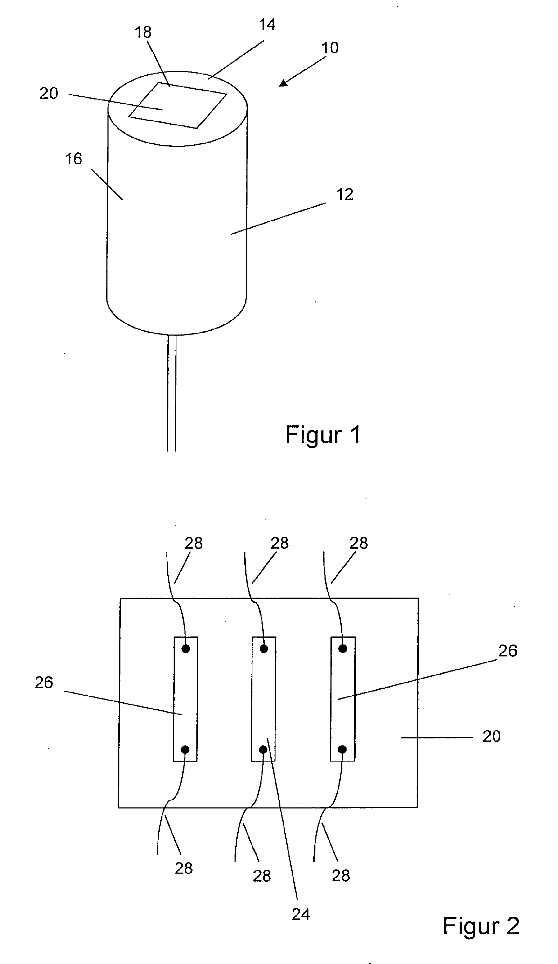

In Fig. 1 ist ein Wärmesensor 10 dargestellt. Der Wärmesensor 10 umfasst ein als Hülse ausgebildetes Gehäuse 12. Das Gehäuse 12 umfasst eine Stirnseite 14 und eine Mantelfläche 16. Die Stirnseite 14 bildet einen Chipaufnahmebereich. In der Stirnseite 14 ist eine Aussparung 18 zur Aufnahme einer in den Figuren 2 bis 4 genauer dargestellten Messvorrichtung 20 vorgesehen. Anstelle der Aussparung 18 beispielsweise in Form einer Vertiefung mit einem Durchlass für elektrische Anschlüsse kann auch eine Öffnung in der Stirnseite14 des Gehäuses vorgesehen sein, in der die Messvorrichtung eingefügt ist.

Die Mantelfläche 16 des Gehäuses 12 ist aus einem Metall wie etwa einer Chrom-Nickel-Legierung hergestellt. Die Stirnfläche des Gehäuses 12 besteht aus einem elektrisch isolierenden Material wie etwa Glas oder Keramik. Alternativ kann die Mantelfläche auch aus Glas oder Keramik hergestellt sein.

Der Wärmesensor 10 umfasst weiterhin nicht dargestellte Steuer- und Auswerteeinheiten sowie eine elektrische Energiequelle wie beispielsweise eine Batterie.

Die Messvorrichtung 20 umfasst einen Halbleiterchip 22. Auf dem Halbleiterchip 22, beispielsweise aus Silizium, ist wie in Figur 2 dargestellt ein Heizelement 24 angeordnet. In geringem Abstand von dem Heizelement 24 sind beidseitig des Heizelements 24 Messelemente 26 auf dem Halbleiterchip 22 angeordnet. Das Heizelement 24 und die Messelemente 26 sind monolithisch auf dem Halbleiterchip 22 integriert. Der Abstand zwischen einem Messelement 26 und dem Heizelement 24 beträgt vorzugsweise 10 bis 30 µm. Hierdurch ist eine gute thermische Kopplung zwischen Heizelement 24 und Messelement 26 gewährleistet, wobei gleichzeitig die Heiz- bzw. Messelemente 24 bis 26 elektrisch voneinander isoliert sind.

Die Messelemente 26 und das Heizelement 24 sind temperaturabhängige Widerstände, die jeweils mit Anschlussleitern 28 elektrisch mit einer nicht dargestellten Stromversorgungseinheit bzw. einer nicht dargestellten Steuer- und Auswerteeinheit verbunden sind.

Das Heizelement 24 weist einen niederohmigen Widerstand auf und hat vorzugsweise einen Wert von <100 Ohm bei Raumtemperatur. Das Messelement 26 hingegen ist ein möglichst hochohmiger Widerstand, der vorzugsweise einen Wert > 10 000 Ohm bei Raumtemperatur aufweist.

Der Wert der Widerstände des Heizelements 26 und der Messelemente 24 lässt sich durch geeignete Dotierung des Chipmaterials erzielen.

Das Heizelement 24 wird von einem Konstantstrom aus einer nicht dargestellten Batterie gespeist, wobei der Heizstrom pulsförmig geschaltet ist. Die Temperatur des Heizelements 24 stellt sich in Abhängigkeit von der Strömungsgeschwindigkeit des zu messenden Mediums ein. Hierbei gilt, dass bei großen Strömungsgeschwindigkeiten die Temperatur des Heizelements kleiner ist als bei kleinen Werten der Strömungsgeschwindigkeit. Da das Heizelement 24 die Messelemente 26 in Abhängigkeit der Strömungsgeschwindigkeit des Fluids erwärmt, ändert sich der temperaturabhängige Widerstand der Messelemente 26 in Abhängigkeit der Strömungsgeschwindigkeit des Fluids. Der temperaturabhängige Widerstand der Messelemente 26 ist ein Maß für die Strömungsgeschwindigkeit des zu messenden Mediums und somit für den Durchfluss.

Die Messung der Temperatur erfolgt in einem Zustand bzw. Zeitabschnitt, in dem das Heizelement 24 nicht beheizt wird. Die von dem Messelement 26 erfasste Temperatur entspricht der Temperatur des Fluids.

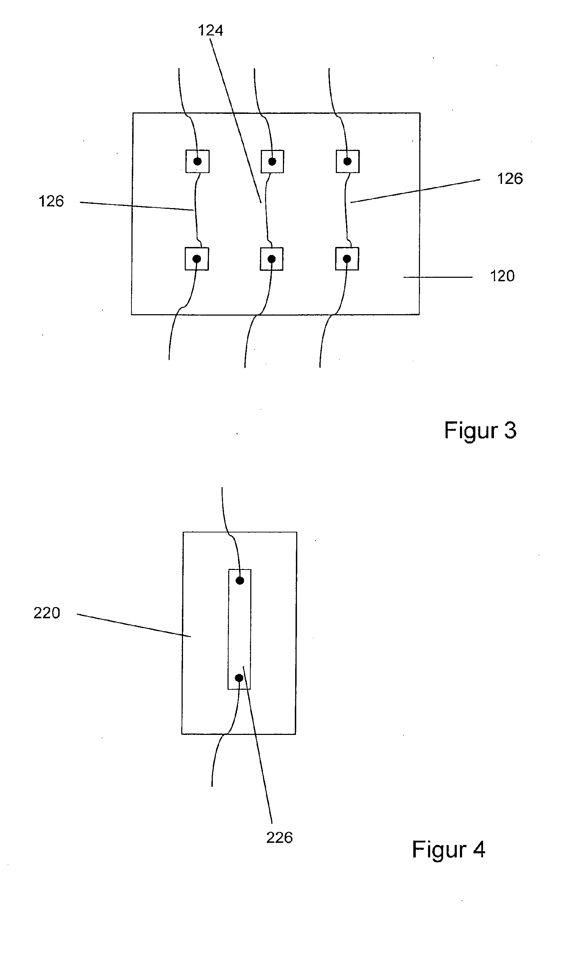

Fig. 3 zeigt eine Weiterbildung eines Halbleiterchips 122. Die in Fig. 3 dargestellte Ausführungsform unterscheidet sich von der in Fig. 2 dargestellten dadurch, dass das Heizelement 124 und die Messelemente 126 als frei liegende Leiterbahnen auf dem Halbleiterchip 122 ausgebildet sind. Die frei liegenden Leiterbahnen sind somit thermisch von dem Halbleiterchip 122 entkoppelt, so dass keine Wärmeübertragung von den Leiterbahnen zu dem Halbleiterchip 122 erfolgt.

Die Funktionsweise des Halbleiterchips 122 entspricht dem in Fig. 2 dargestellten. So wird bei dem in Fig. 3 dargestellten Halbleiterchip 122 die Temperatur während eines ersten Zeitintervalls gemessen, in dem sich das Heizelement 124 im ungeheizten Zustand befindet. Die Messung des Durchflusses erfolgt dann, wenn das Heizelement 124 mit gepulstem Strom beaufschlagt wird.

Fig. 4 zeigt eine dritte Ausführungsform eines Halbleiterchips 222. Bei dieser Ausführungsform ist ein beheizbares Messelement 226 vorgesehen. Das heißt, bei dieser Ausführungsform sind das Heizelement und das Messelement als ein Element ausgebildet. Zur Messung des Durchflusses wird das Messelement 226 erhitzt, und aus dem Abkühlverhalten des Messelements kann Rückschluss auf den Durchfluss des Fluids gezogen werden. Zur Messung der Temperatur des Fluids wird der Stromfluss durch das Messelement 226 in ungeheiztem Zustand bestimmt.

Wenn in den Figuren 2 und 3 auch zwei Messelemente 26 bzw.126 vorgesehen sind, so kann im Rahmen der Erfindung auch nur ein Messelement vorgesehen sein.

Anstelle einer Hülse kann jede beliebige Form eines Gehäuses verwendet werden, das einen Aufnahmebereich aus einem elektrisch isolierenden Material mit einer Aussparung oder Öffnung zur Aufnahme eines Halbleiterchips aufweist.

So ist es im Rahmen der Erfindung beispielsweise möglich eine im Querschnitt rechteckige Hülse zu verwenden, wobei wenigstens eine Seitenfläche aus einem elektrisch isolierenden Material mit einer Aussparung oder Öffnung zur Aufnahme eines Halbleiterchips ausgebildet ist.

Der in den Figuren 1 bis 4 dargestellte Wärmesensor ist für den Einsatz in einem Wärmezähler geeignet.

So umfasst ein Wärmezähler zur Messung des Durchflusses und der Temperatur im Vor- und Rücklauf einen erfindungsgemäßen Wärmesensor, der zur Messung der Temperatur im Vorlauf und des Durchflusses im Vorlauf angeordnet ist, und einen Temperatursensor, der im Rücklauf angeordnet ist. Selbstverständlich kann der Wärmesensor auch umgekehrt im Rücklauf und der Temperatursensor im Vorlauf eingesetzt werden.

Alternativ können sowohl im Vorlauf als auch im Rücklauf zwei erfindungsgemäße Wärmesensoren eingesetzt werden.

## Patentansprüche

1. Wärmesensor umfassend eine Messvorrichtung (20) mit einem Heizelement (24; 124) und einem Messelement (26; 126; 226), wobei das Heizelement (24; 124; 226) und das Messelement (26; 126; 226) thermisch miteinander gekoppelt sind, und ein Gehäuse (12), das den Wärmesensor aufnimmt, **dadurch gekennzeichnet, dass** das Heizelement (24; 124; 226) und das Messelement (26; 126; 226) auf einem Halbleiterchip (22; 122; 222) monolithisch integriert sind und dass das Gehäuse (12) eine nach außen weisende Aussparung (18) oder eine Öffnung aufweist, in der der Halbleiterchip (22; 122; 222) aufgenommen ist.

2. Wärmesensor nach Anspruch 1, **dadurch gekennzeichnet, dass** das Heizelement (24; 124) und das Messelement (26; 126) mit geringem Abstand, insbesondere im Bereich von etwa 10 bis 30 µm, voneinander angeordnet sind.

3. Wärmesensor nach Anspruch 1, **dadurch gekennzeichnet, dass** das Messelement (226) und das Heizelement (226) als ein Element ausgebildet sind.

4. Wärmesensor nach einem der vorhergehenden Ansprüche, **dadurch gekennzeichnet, dass** die Temperaturkennlinie des Widerstands des Messelements (26; 126; 226) und/oder des Heizelements (24; 124; 226) mittels geeigneter Dotierung des Halbleitermaterials einstellbar sind.

5. Wärmesensor nach einem der vorhergehenden Ansprüche, **dadurch gekennzeichnet, dass** das Heizelement (24; 124) als temperaturabhängiger niederohmiger Widerstand ausgebildet ist.

6. Wärmesensor nach einem der vorhergehenden Ansprüche, **dadurch gekennzeichnet, dass** das Messelement (26; 126), als hochohmiger Widerstand ausgebildet ist.

7. Wärmesensor nach einem der vorhergehenden Ansprüche, **dadurch gekennzeichnet, dass** das Heizelement (24; 124: 226) mit gepulstem Strom beaufschlagt wird.

8. Wärmesensor nach einem der vorhergehenden Ansprüche, **dadurch gekennzeichnet, dass** das Messelement (26; 126; 226) und/oder das Heizelement (24; 124; 226) jeweils als freiliegende Leiterbahn auf dem Halbleiterchip (122) ausgebildet ist/sind.

9. Wärmesensor nach einem der vorhergehenden Ansprüche, **dadurch gekennzeichnet, dass** das Gehäuse (12) einen Chipaufnahmebereich aufweist, der aus einem elektrisch isolierenden Material besteht, wobei die Aussparung (18) oder Öffnung, in der der Halbleiterchip (22) aufgenommen ist, in dem Chipaufnahmebereich ausgebildet ist.

10. Wärmesensor nach Anspruch 9, **dadurch gekennzeichnet, dass** das Gehäuse (12) als Hülse mit einer Stirnfläche (14) und einer Mantelfläche (16) ausgebildet ist, wobei die Stirnfläche (14) der Hülse den Chipaufnahmebereich bildet und die Mantelfläche (16) der Hülse aus einem Metall, Keramik oder Kunststoff besteht.

11. Verfahren zur Messung der Temperatur eines Fluids mit einem Wärmesensor nach einem der vorhergehenden Ansprüche, **dadurch gekennzeichnet, dass**
- sich das Heizelement (24; 124; 226) in einem unbeheizten Zustand befindet
und
- die Temperatur des Messelements (26; 126; 226) erfasst wird.

12. Verfahren zur Messung des Durchflusses eines Fluids mit einem Wärmesensor Sensor nach einem der vorhergehenden Ansprüche, **dadurch gekennzeichnet, dass**
- das Heizelement (24; 124; 226) mit einem gepulsten Strom beaufschlagt wird;
- das Messelement (26; 126; 226) vom Heizelement (24; 124; 226) erwärmt wird;
- die Temperatur des Messelements (26; 126; 226) erfasst wird, wobei die Temperatur des Messelements (26; 126; 226) ein Maß für den Durchfluss des Fluids ist.

13. Verfahren zur Messung der Temperatur und des Durchflusses eines Fluids mit einem Wärmesensor Sensor nach einem der vorhergehenden Ansprüche, **dadurch gekennzeichnet, dass**
ein erster Zeitabschnitt vorgesehen ist, in dem
- sich das Heizelement (24; 124; 226) in einem unbeheizten Zustand befindet
und
- die Temperatur des Messelements (26; 126; 226) erfasst wird,
- und dass ein zweiter Zeitabschnitt vorgesehen ist, in dem
- das Heizelement (24; 124; 226) mit einem gepulsten Strom beaufschlagt wird;
- das Messelement (26; 126; 226) vom Heizelement (24; 124) erwärmt wird;
- die Temperatur des Messelements (26; 126; 226) erfasst wird, wobei die Temperatur des Messelements (26; 126; 226) ein Maß für den Durchfluss des Fluids ist.

14. Wärmezähler umfassend wenigstens einen Wärmesensor (10) nach einem der Ansprüche 1 bis 10.
